# EUROPEAN PATENT APPLICATION

(11) **EP 4 155 168 A1**
(43) Date of publication of application: **29.03.2023**
(21) Application number: 22196791.2
(22) Date of filing: 21.09.2022
(51) Int. Cl.: B62B 1/20

(54) **TRANSPORTATION DEVICE**

(30) Priority: 24.09.2021 GB 202113625
(71) Applicant: Preston Innovations Limited, Telford Shropshire TF3 3BJ (GB)
(72) Inventor: ROGERS, Leon, Bilston, WV14 9BG (GB); LEESE, Thomas William, Newcastle-under-Lyme, ST5 4LH (GB); FORRESTER, Thomas Elliot, Shrewsbury, SY2 6RH (GB); MOLYNEUX, Anthony, Telford, TF4 2GF (GB)
(74) Representative: Hanson, William Bennett

(57) **Abstract**

A transportation device such as a wheelbarrow, trolley, cart or shuttle. The device comprises a base, and a wheel 20 mounted on at least one fork 16, 18 depending from the base, such that in an erected state of the transportation device the fork is generally perpendicular to the base, the fork 16, 18 being pivotable relative to the base such that in a collapsed state of the transportation device, the fork and the wheel 20 are generally parallel to the base.

## Description

This invention relates to a transportation device such as a wheelbarrow, trolley, cart or shuttle.

A known wheelbarrow for anglers is demountable for storage or transport within a vehicle. This is achieved by removing a wheel and wheel frame from a base of the wheelbarrow. The disassembled wheelbarrow is still large. Multiple parts have to be assembled and disassembled, with the potential for parts to be lost. Generally, the known wheelbarrow is inconvenient in use.

The invention provides a transportation device comprising a base, and a wheel mounted on at least one fork depending from the base, such that in an erected state of the transportation device the fork is generally perpendicular to the base, the fork being pivotable relative to the base such that in a collapsed state of the transportation device, the fork and the wheel are generally parallel to the base.

The fork may be attached to a bar arranged to be essentially coplanar with the base and being rotatable about an axis of the bar to cause pivoting of the fork.

An additional fork may be attached to an additional bar, connected to said bar by a cross piece, the additional bar being attached to, and generally coplanar with, the base in the erected state of the device and detached therefrom in the collapsed state.

The bar and the additional bar may constitute a wheel frame. The wheel frame may be slidable between a first position, in the erected state of the device, and a second position. In the first position, the wheel may be disposed in the centre of the base. A fastener may be provided for retaining the wheel frame in the first position. The fastener may comprise a retainer arranged to engage the bar and/or the additional bar to prevent sliding thereof. The retainer may be pivotable with respect to the base.

Alternatively, the fastener may comprise one or more bolts on the bar, the additional bar and/or the base, engageable in one or more brackets on another or others of the bar, the additional bar and/or the base.

An additional fastener may be provided for retaining the wheel frame against the base in the collapsed state.

Embodiments of the invention will now be described in more detail, by way of example only, with reference to the accompanying drawings, in which:
Figure 1 is a perspective view of a wheelbarrow according to the invention;
Figure 2 is an exploded view of the wheelbarrow of Figure 1;
Figure 3 is a side view of the wheelbarrow of Figure 1, in the collapsed state;
Figure 4 is a perspective view of the wheelbarrow of Figure 1, in the collapsed state;
Figure 5 is a perspective view of a further wheelbarrow according to the invention;
Figure 6 is a side view of yet another wheelbarrow according to the invention;
Figure 7 is a cut-away perspective view of the wheelbarrow of Figure 6;
Figure 8 shows the wheel frame of the wheelbarrow of Figure 6; and
Figure 9 is a sectional view of a bolt of the wheelbarrow of Figure 6.

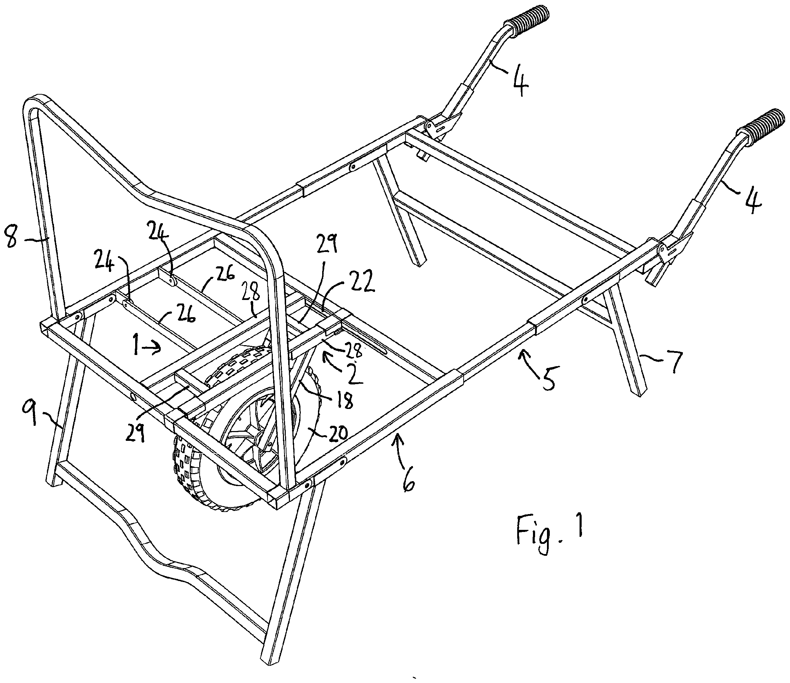

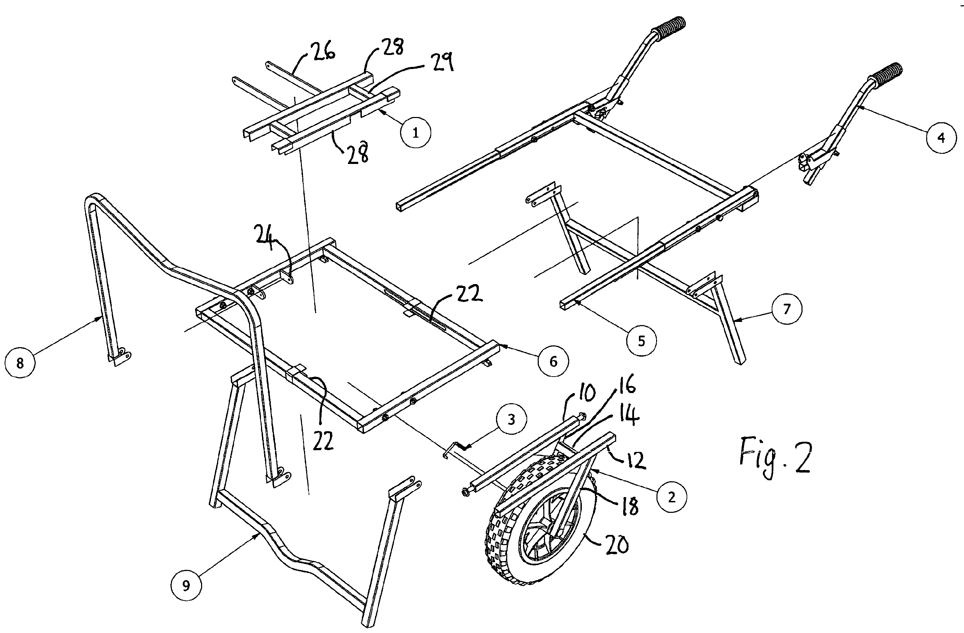

Figures 1-4 show a foldable wheelbarrow for anglers.

A base of the barrow comprises a generally rectangular frame formed from a front, generally rectangular, frame part 6 and a three-sided rear frame part 5. A retaining "M" frame 8 and a front leg frame 9 are pivotably attached the front frame part 6 at its front. A rear leg frame 7 and two handles 4 are pivotably attached to the rear frame part 5 at its rear.

A wheel frame 2 comprises first and second parallel bars 10, 12. First and second forks 16, 18 depend from the respective parallel bars 10, 12 at a suitable angle and are connected by a cross bar 14. A wheel 20 is mounted between the forks 16, 18.

The ends of the parallel bars 10, 12 are slidably received in slots 22 in the transverse rails of the front frame part 6. In addition, the ends of the first parallel bar 10 are rotatable relative to the frame part 6.

A wheel locking frame 1 extends from hinges 24 on a side of the front frame part 6. The wheel locking frame comprises pivoting bars 26 connected to one of two hollow parallel bars 28 that are joined by transverse bars 29.

In the erected state of the barrow, the hollow parallel bars 28 fit over the respective parallel bars 10, 12 of the wheel frame 2 and prevent sliding of the wheel frame.

In order to collapse the wheel frame 2, the wheel locking frame 1 is temporarily raised. The first parallel bar 10 is then slid along the slots 22 whilst the wheel frame 2 is pivoted around the first parallel bar 10. The wheel frame 2 with the wheel 20 is then arranged generally parallel to the base. It is kept in place by means of a locking pin 3 which secures the wheel frame 2 to one of the hollow parallel bars 28.

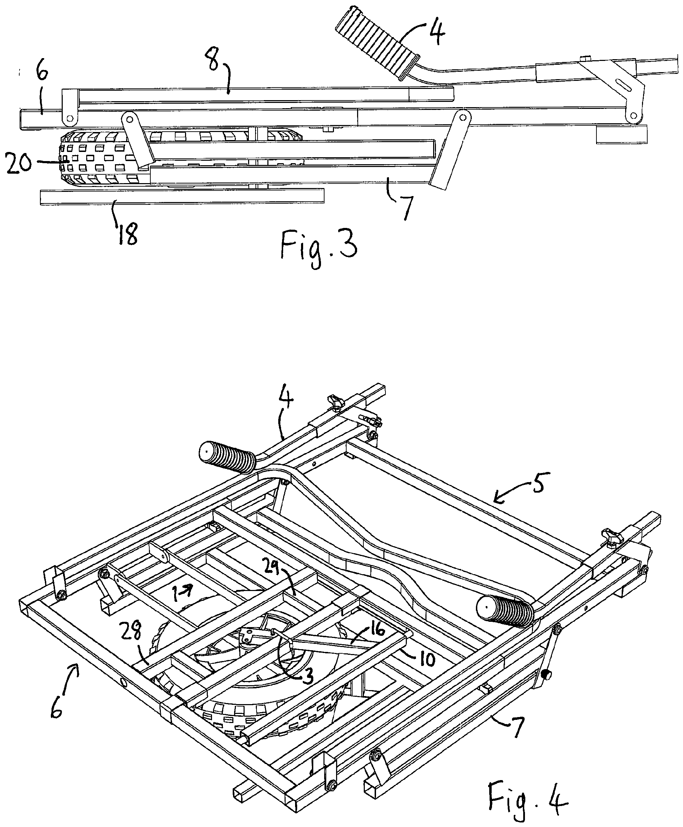

The handles 4 and the retaining frame 8 are folded downwardly, and the front and rear leg frames 9, 7 and folded upwardly. The folded barrow is shown in Figures 3 and 4.

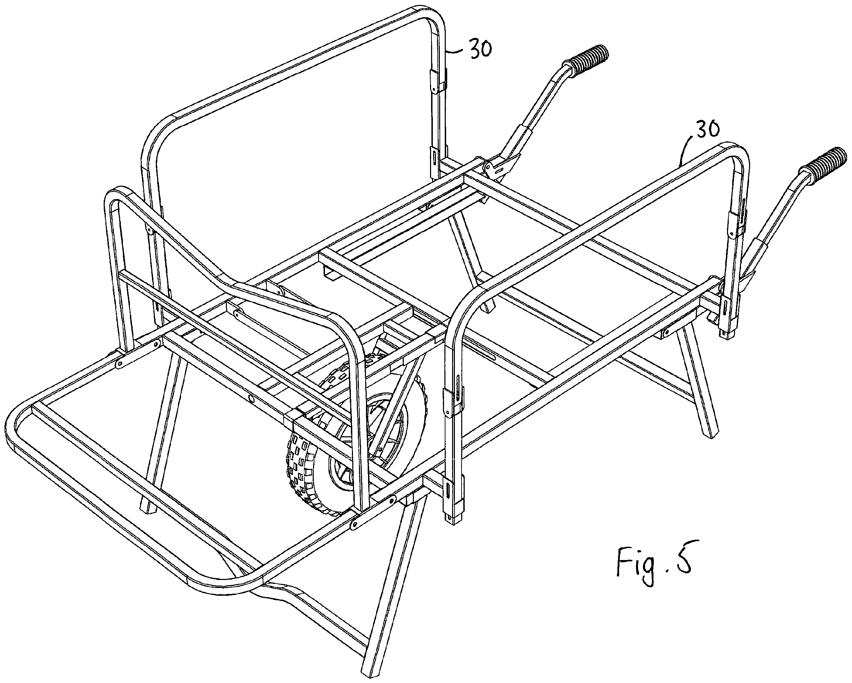

Figure 5 shows a further, larger wheelbarrow according to the invention. In addition to the features of the barrow of Figures 1-4, the barrow of Figure 5 has side retaining frames 30 which are foldable downwardly against the base.

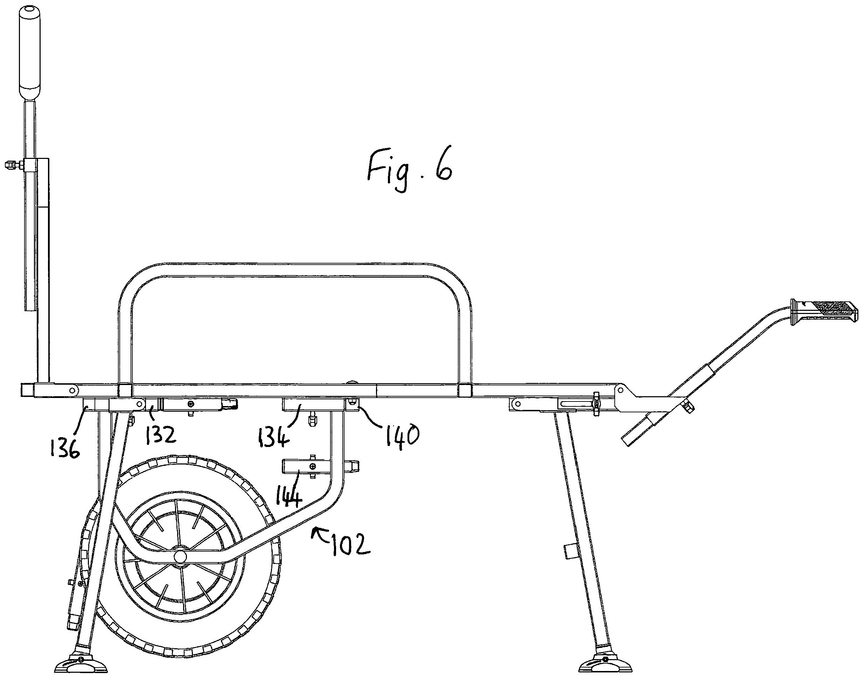

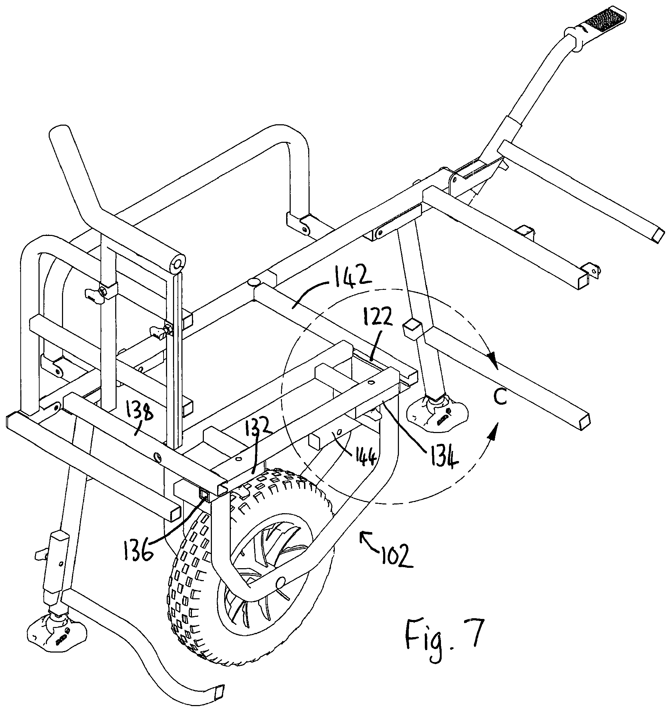

Figures 6 to 9 show an alternative wheelbarrow generally similar to the wheelbarrow of Figures 1-4 but with a different means of locking the wheel frame in its deployed and folded positions.

A second parallel bar 112 of a wheel frame 102 of the barrow is fitted with a front slidable bolt 132 and a rear slidable bolt 134. The front slidable bolt 132 engages in a front bracket 136 on a front transverse rail 138 of the barrow. The rear slidable bolt 134 engages in a rear bracket 140 on a central transverse rail 142. These engagements keep the wheel frame 102 in its deployed position.

The ends of the parallel bars 110, 112 are received in slots 122 in the transverse rails 138, 142 and are slidable in those slots when the bolts 132, 134 are withdrawn from the brackets 136, 140. In addition, the ends of the first parallel bar 110 are rotatable relative to the transverse rails 138, 142.

A third slidable bolt 144 is located on the fork of the wheel frame 106 other than the fork where the rear slidable bolt 134 is located.

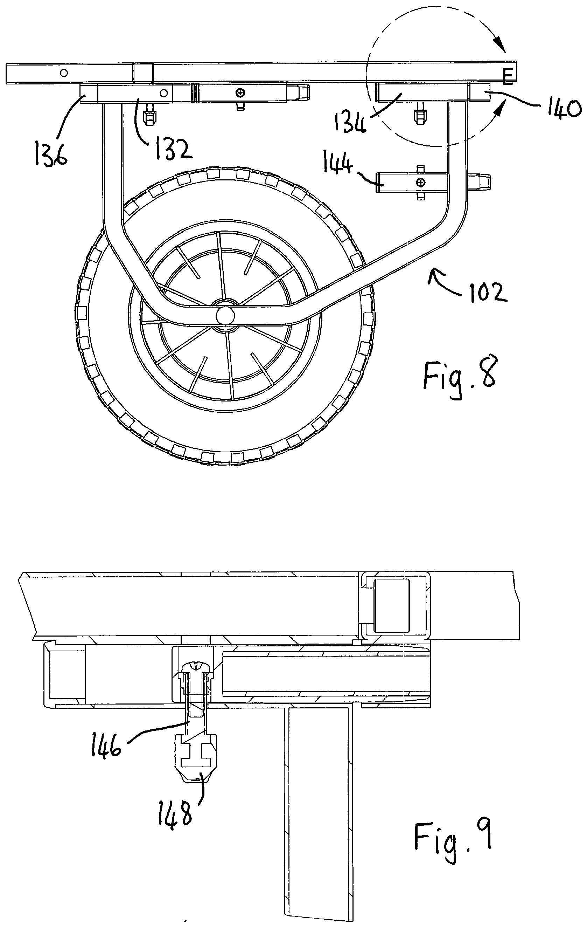

Figure 9 shows details of one of the slidable bolts 132, 134, 144. A threaded rod 146 having a head 148 is seated in a threaded hole in the bolt. The bolt can be secured in either an engaged or withdrawn position by manually tightening the rod 146.

In order to collapse the wheel frame 102, the front and rear slidable bolts 132,134 are withdrawn from the brackets 136,140. The first parallel bar 110 is then slid along the slots 122 whilst the wheel frame 102 is pivoted around the first parallel bar 110. The wheel frame 102 with the wheel 120 is then arranged generally parallel to the base. It is kept in place by engaging the third slidable bolt 144 in an additional bracket on the central transverse rail 142.

The wheelbarrow is then further collapsed in the same manner as the barrow of Figures 1 to 4.

The transportation device of the invention is foldable to a small size in a particularly convenient manner with a reduced risk of loss of parts.

## Claims

1. A transportation device comprising a base, and a wheel (20) mounted on at least one fork (16) depending from the base, such that in an erected state of the transportation device the fork is generally perpendicular to the base, the fork (16) being pivotable relative to the base such that in a collapsed state of the transportation device, the fork (16) and the wheel (20) are generally parallel to the base.

2. A transportation device according to claim 1, wherein the fork (16) is attached to a fork bar (10, 110) arranged to be essentially coplanar with the base and rotatable about an axis of the fork bar to cause pivoting of the fork (16).

3. A transportation device according to claim 2, wherein an additional fork (18) is attached to an additional bar (12, 112), connected to said fork bar (10, 110) by a cross piece (14), the additional bar being attached to, and generally coplanar with, the base in the erected state of the device and detached therefrom in the collapsed state.

4. A transportation device according to claim 3, wherein the fork bar (10, 110) and the additional bar (12,112) constitute a wheel frame (2, 102), the wheel frame being slidable between a first position, in the erected state of the device, and a second position.

5. A transportation device according to claim 4, wherein, in the first position, the wheel (20) is disposed in the centre of the base.

6. A transportation device according to claim 4 or 5, including a fastener (1, 132,134) for retaining the wheel frame in the first position.

7. A transportation device according to claim 6, wherein the fastener comprises a retainer (1) arranged to engage the fork bar (10) and/or the additional bar (12) to prevent sliding thereof.

8. A transportation device according to claim 7, wherein the retainer (1) is pivotable with respect to the base.

9. A transportation device according to claim 6, wherein the fastener comprises one or more bolts (132, 134) on the fork bar (110), the additional bar (112) and/or the base, engageable in one or more brackets (136,140) on another or others of the fork bar, the additional bar and/or the base.

10. A transportation device according to any one of claims 4 to 9, wherein a collapsed state fastener (3, 144) is provided for retaining the wheel frame (2, 102) against the base in the collapsed state.
